# EUROPÄISCHE PATENTSCHRIFT

(11) **EP 1 054 611 B1**
(45) Veröffentlichungstag und Bekanntmachung des Hinweises auf die Patenterteilung: **14.11.2001**
(21) Anmeldenummer: 99910127.2
(22) Anmeldetag: 11.02.1999
(51) Int. Cl.: A47J 31/20

(54) **GERÄT ZUM ZUBEREITEN VON BRÜHGETRÄNKEN**
MACHINE FOR PREPARING HOT DRINKS
APPAREIL POUR PREPARER DES BOISSONS CHAUDES

(30) Priorität: 11.02.1998 DE 29802338 U
(43) Veröffentlichungstag der Anmeldung: 29.11.2000
(73) Patentinhaber: Kotowsky, Arne, 52349 Düren (DE)
(72) Erfinder: Kotowsky, Arne, 52349 Düren (DE)
(74) Vertreter: Castell, Klaus, Dr.-Ing.
(86) Internationale Anmeldenummer: DE9900383
(87) Internationale Veröffentlichungsnummer: WO9940830

(56) Entgegenhaltungen:
- WO-A-91/09559
- DE-A- 3 530 284
- DE-A- 3 538 037
- DE-A- 3 630 617
- DE-A- 4 433 474
- DE-C- 835 025

## Beschreibung

Die Erfindung betrifft ein Gerät zum Zubereiten von Brühgetränken.

Für die Zubereitung bestimmter Brühgetränke, insbesondere von Tee, ist es wesentlich, eine bestimmte Brühzeit einzuhalten, um dem Brühgetränk den gewünschten Geschmack oder Wirkstoffgehalt zu geben. Es gibt deshalb Maschinen und Geräte, mit denen die zu überbrühenden Substanzen in ein mit kochenden Wasser gefülltes Brühgefäß eingetaucht und nach Ablauf einer vorbestimmten Zeit wieder aus dem Brühgefäß entfernt werden. Die meisten dieser Geräte verfügen über eine elektrische Heizeinrichtung, mit der die Brühflüssigkeit erhitzt und nach dem Brühvorgang warmgehalten werden kann, und über einen elektrischen Antrieb für das Eintauchen und Herausheben des Behältnisses für die Brühsubstanz. Insbesondere wird in diesem Zusammenhang auf die WO 91/09559 A1 hingewiesen.

Alle diese bekannten Geräte und Maschinen sind verhältnismäßig kompliziert in ihrem Aufbau und benötigen alle einen Stromanschluß.

Darüber hinaus ist aus der DE 44 33 474 A1 ein Gerät zum Zubereiten von Tee bekannt, bei welchem ein mit einem Uhrwerk gekoppeltes Antriebsrad eine Schiene antreibt, an deren Ende sich ein Körbchen für einen Teebeutel befindet. Über das Uhrwerk kann eine bestimmte Zeit eingestellt werden, nach welcher eine Glocke schrillt und die Schiene mit dem Körbchen von dem Antriebsrad aus dem Wasser gezogen wird. Diese Anordnung hat einerseits den Nachteil, daß die Mechanik zur Führung der Schiene verhältnismäßig aufwendig gearbeitet werden muß, um eine sichere und gleichförmige Führung zu gewährleisten. Ansonsten kommt es zu einem Verhaken, wodurch die Betriebstauglichkeit dieses Geräts zerstört wird. Darüber hinaus wird diese Anordnung auf einen Getränkebehälter, wie eine Teekanne, gesetzt, was wegen einer Schwerpunktverlagerung zu einer verhältnismäßig instabilen Anordnung führt. Weiter ist ein Gerät gemäß dem Oberbegriff des Anspruchs 1 aus DE3530284 A1 bekannt.

Es ist Aufgabe vorliegender Erfindung, ein verhältnismäßig einfach aufgebautes und dennoch betriebssicheres Gerät zum Zubereiten von Brühgeräten bereitzustellen, bei welchem dennoch eine bestimmte Brühzeit eingestellt bzw. gewährleistet werden kann.

Diese Aufgabe löst die Erfindung durch ein Gerät zum Zubereiten von Brühgetränken, welches einen mechanisch angetriebenen Schwenkhebel, an dessen freien Ende eine Befestigungsvorrichtung für ein Behältnis für Brühsubstanzen angeordnet ist, und einen Zeitmesser umfaßt, der derart mit dem Schwenkhebel wirkverbunden ist, daß er nach Ablauf einer vorbestimmten Zeit eine mechanisch angetriebene Schwenkbewegung iniziiert.

Durch die Verwendung eines Schwenkhebels kann das erfindungsgemäße Gerät in unmittelbarer Nachbarschaft zu einem Gefäß, wie zu einer Teetasse, positioniert werden, ohne daß es mit diesem Gefäß in Kontakt kommt. Hierbei erfolgt die Positionierung des Gerätes in der Weise, daß der Schwenkhebel, solange die vorbestimmte bzw. vorgewählte Brühzeit nicht abgelaufen ist, das Behältnis für Brühsubstanzen, wie einen Teebeutel, in das Gefäß abgesenkt hält und daß er nach Ablauf der Zeit das Behältnis aus diesem Gefäß entfernt.

Durch die Verwendung eines mechanischen Antriebes kann das erfindungsgemäße Gerät einerseits verhältnismäßig einfach konstruktiv aufgebaut sein. Insbesondere kann hinsichtlich des Antriebs auf einen elektrischen Antrieb verzichtet werden, wodurch das Gerät wesentlich einfacher an verschiedensten Orten einsetzbar ist. Auf diese Weise kann das erfindungsgemäße Gerät insbesondere auch mit kleineren Gefäßen, wie Teetassen oder Teegläsern, einfach verwendet werden. Es braucht lediglich neben eine derartige Tasse bzw. neben ein derartiges Glas gestellt und in der vorbeschriebenen Weise betätigt werden. Insbesondere kann das Gerät ohne Weiteres neben eine Teetasse bzw. neben ein Teeglas gestellt werden, ohne diese zu beeinflussen bzw. mit seinem Gewicht zu belasten. Auf diese Weise ermöglicht das erfindungsgemäße Gerät zum Zubereiten von Brühgetränken erstmals, daß auch bei Tassenportionen die Brühzeit gewählt bzw. vorbestimmt werden kann.

Vorteilhafterweise ist an dem freien Ende des Schwenkhebels ein Behältnis für Brühsubstanzen anhängbar bzw. angehängt. Bei einer derartigen Anordnung sind die Kräfte, die auf das Gefäß mit dem Brühgetränk ausgeübt werden, wenn das Behältnis für die Brühsubstanzen unbeabsichtigt an die Gefäßwand gelangt, verhältnismäßig gering, da das Behältnis für Brühsubstanzen lediglich der Schwerkraft unterliegt. Dieses gewährleistet in besonderem Maße, daß das erfindungsgemäße Gerät auch mit kleinen Getränkebehältern ohne Weiteres verwendet werden kann.

Alternativ bzw. kumulativ kann an dem freien Ende des Schwenkhebel eine Befestigungsvorrichtung zur um eine horizontale Achse schwenkbaren Befestigung eines Behältnisses für Brühsubstanzen vorgesehen sein. Auch durch eine derartige Anordnung kann die Gefahr, daß das Gefäß mit dem Brühgetränk beim Bewegen des Schwenkhebels umgestoßen wird, erheblich reduziert werden, so daß diese Anordnung vorteilhaft auch für kleine Gefäße geeignet ist.

Insofern kann alternativ oder kumulativ an dem freien Ende des Schwenkhebels ein Behältnis für Brühsubstanz um eine horizontale Achse schwenkbar befestigt sein. Es versteht sich, daß diesbezüglich eine Befestigung auf alle denkbare Arten erfolgen kann. Insbesondere können Haken oder Drehgelenke vorgesehen sein. Ebenso kann eine Klammer am Ende des Schwenkhebels angebracht werden. Wesentlich ist, daß ein an dem Schwenkhebel angebrachtes Brühgefäß in horizontaler Richtung einen gewissen Freiheitsgrad aufweist, so daß es, wenn es an eine Gefäßwand anstößt, ohne Weiteres nachgeben kann. Es versteht sich, daß eine derartige Befestigung eines Behältnisses für Brühsubstanzen auch unabhängig von den übrigen Merkmalen des Gerätes zum Zubereiten von Brühgeräten vorteilhaft Verwendung finden kann.

Die Schwenkachse kann insbesondere senkrecht zu dem Schwenkhebel vorgesehen sein, wodurch die größte Gefahr, daß ein Gefäß durch einen unerwünschten Kontakt umgeworfen wird, vermieden werden kann.

Für handelsübliche Teebeutel kann insbesondere am freien Ende des Schwenkhebels eine Klemme bzw. ein Klemmhaken angebracht sein, in dem der Teebeutel selbst oder ein an diesem angebrachter Faden festgeklemmt wird. Bedingt durch die Nachgiebigkeit des Teebeutels bzw. dessen Fadens kann dieser den seitlichen Kräften ohne Weiteres nachgeben, und ein unbeabsichtigtes Umstoßen eines verhältnismäßig leichten Getränkebehälters, wie einer Teetasse oder eines Teeglases, kann vermieden werden.

Der Schwenkhebel kann mit einer Aktivierwelle eines Kraftspeichers über ein Antriebsgetriebe verbunden sein. Hierbei kann die Aktivierwelle mit dem Zeitmesser derart wirkverbunden sein, daß die Aktivierwelle nach Ablauf der vorbestimmten Zeit gelöst wird und sich der Kraftspeicher entlädt. Eine derartige Anordnung realisiert auf besonders einfache Weise einen mechanischen Antrieb. Als Kraftspeicher kann beispielsweise eine Feder oder ein ähnlicher mechanischer Kraftspeicher Verwendung finden. Darüber hinaus kann die Aktivierwelle derart mit dem Zeitmesser verbunden sein, daß durch die Aktivierwelle die vorbestimmte Zeit gewählt wird. Auf diese Weise kann gleichzeitig der Kraftspeicher mit einer Kraft beaufschlagt und der Zeitmesser aktiviert werden, so daß für ein Spannen des Kraftspeichers sowie die Zeitvorwahl lediglich ein Handgriff notwendig ist. Durch die Verbindung des Schwenkhebels mit der Aktivierwelle über das Antriebsgetriebe wird mit diesem einzigen Handgriff gleichzeitig der Schwenkhebel in eine erste Position gebracht, in welcher er das Behältnis für Brühsubstanzen in das Gefäß eintaucht.

Es versteht sich, daß die konkrete mechanische Ausgestaltung, die eine Verbindung des Schwenkhebels mit der Aktivierwelle des Kraftspeichers über ein Antriebsgetriebe realisiert, auch unabhängig von der Verwendung eines Schwenkhebels für andere Arten von Hubgestängen, mit welchen ein Behältnis für Brühsubstanzen aus einem Gefäß angehoben werden kann, vorteilhaft ist. Auch die Wirkverbindung zwischen Aktivierwelle und Zeitmesser ist unabhängig von der Verwendung eines Schwenkhebels auch für andere Hubgetriebe zum Anheben eines Behältnisses für Brühsubstanzen aus einem Gefäß vorteilhaft.

Ist der Schwenkhebel an einem Ständer gelagert, braucht er nicht übermäßig lang ausgebildet zu werden. Dieses erhöht einerseits die Stabilität des erfindungsgemäßen Gerätes und vermeidet andererseits, daß zu hohe Kräfte für einen Antrieb des Schwenkhebels aufgebracht werden müssen.

Bei einer derartigen Anordnung können der Schwenkhebel und der Ständer derart gewählt werden, daß der Schwenkhebel ohne Weiteres über einen Gefäßrand hinausragen kann, ohne daß zu große Hebelverhältnisse entstehen, welche die Stabilität des erfindungsgemäßen Gerätes beeinträchtigen könnten. Durch ein zusätzliches Gewicht am unteren Ende des Ständers läßt sich die Stabilität der Gesamtanordnung darüber hinaus erhöhen.

Um das erfindungsgemäße Gerät in seinen Abmessungen nicht zu groß auszuführen, können der Schwenkhebel, sein Getriebe und sein Antrieb zweckmäßig übereinander an einer Ständerplatine angeordnet sein, die Bestandteil des Ständers oder an demselben angebracht ist. Die Gesamtmechanik kann hierbei von einem Gehäuse umschlossen sein, welches an seinem oberen Ende einen Schlitz aufweist, aus dem das freie Ende des Schwenkhebels herausragt. Der Antrieb und das Getriebe sind dann geschützt im Gehäuse untergebracht, aus dem nur der Schwenkhebel zum Heben und Senken des Brühbehältnisses herausragt.

Der Schwenkhebel kann über eine Rutschkupplung mit seinem Antrieb bzw. einem entsprechenden Antriebsgetriebe verbunden sein. Hierdurch lassen sich mögliche Beschädigungen vermeiden, wenn der Schwenkhebel gewaltsam oder unabsichtig bewegt wird, beispielsweise wenn das Gerät zu Boden fällt oder der Schwenkhebel von Hand niedergedrückt oder angehoben wird. Auf diese Weise kann sich der Schwenkhebel gegenüber seinem Antrieb verdrehen, ohne daß diese Bewegung Rückwirkungen auf den Antrieb des Hebels hat. Die Rutschkupplung kann hierbei dadurch gebildet sein, daß der Schwenkhebel an seinem Lagerende eine aufgerauhte Seitenfläche aufweist, die mit einer rauhen Seitenfläche des letzten Elementes seines Antriebsgetriebes in Wirkverbindung steht. Hierbei können das Lagerende des Schwenkhebels und das letzte Element des Antriebsgetriebes durch ein Federelement gegeneinander gepreßt werden.

Es versteht sich, daß eine derartige Rutschkupplung auch unabhängig von den übrigen Merkmalen des erfindungsgemäßen Gerätes zum Zubereiten von Brühgetränken vorteilhaft Verwendung finden kann.

Das erfindungsgemäße Gerät zum Zubereiten von Brühgetränken kann eine Weckuhr umfassen, die einen Kraftspeicher, ein Gehwerk und ein Weckwerk aufweist. Eine derartige Anordnung ist verhältnismäßig kostengünstig, da sie aus normalen Weckern schon bekannt ist. Sie kann ohne Weiteres für ein erfindungsgemäßes Gerät Anwendung finden, so daß dieses kostengünstig und in seiner Funktionsweise zuverlässig hergestellt werden kann. Eine derartige bzw. auch eine andere mechanische Umsetzung eines Zeitmessers ist auch unabhängig von den übrigen Merkmalen des erfindungsgemäßen Gerätes zum Zubereiten von Brühgetränken vorteilhaft. Anderseits können auch andere, beispielsweise elektronische, Zeitmesser Verwendung finden, so sie kostengünstig und ohne viel Aufwand in das Gerät mit seinem mechanischen Antrieb für den Schwenkhebel integriert werden können.

Sind bei der vorbeschriebenen Weckuhr sowohl Gehwerk als auch Weckwerk mit dem Kraftspeicher wirkverbunden, kann mit einem einzigen Arbeitsgang sowohl Gehwerk als auch Weckwerk durch den Kraftspeicher betrieben werden. Insbesondere können diese gleichzeitig aufgezogen und bei Erreichen des Entladezeitpunktes gleichzeitig entladen werden, so daß auch das Gehwerk des Zeitmessers stehenbleibt, sobald das Brühbehältnis aus dem Brühgefäß herausgehoben wurde und der Kraftspeicher für seine Zusatzfunktion des Weckens und Antriebes des Schwenkhebels entladen ist.

Insbesondere das Weckwerk kann mit dem Antrieb für den Schwenkhebel wirkverbunden sein. So kann beispielsweise die Aktivierwelle des Kraftspeichers über ein Rädergetriebe oder über ein Hebelgetriebe mit dem Schwenkhebel - oder einem anderen Hubglied - verbunden sein. Beide Getriebearten sind sehr einfach und mit handelsüblichen Zahnrädern oder Hebeln aus Kunststoff oder Metall kostengünstig herzustellen.

Das Weckwerk kann mit einer akkustischen Signaleinrichtung verbunden sein, so daß der Benutzer aufmerksam gemacht wird, wenn der Schwenkhebel das Brühbehältnis nach Ablauf der Brühzeit aus dem Brühgefäß entfernt und das hergestellte Brühgetränk genossen werden kann.

Eine besonders einfache und einfach zu bedienende Konstruktion ergibt sich, wenn die Weckuhr eine für Gehwerk und Weckwerk gemeinsame Aufzugswelle aufweist, die aus dem Gehäuse herausragt und zugleich zur Einstellung des Entladezeitpunktes dient.

Weitere Merkmale und Vorteile der Erfindung ergeben sich aus der nachfolgenden Beschreibung anliegender Zeichnung, in der bevorzugte Ausführungsformen der Erfindung beispielhaft näher erläutert sind. In der Zeichnung zeigen
- Figur 1: ein erfindungsgemäßes Gerät zum Zubereiten von Brühgetränken in Ruhestellung mit angehängtem Teebeutel in seitlicher Ansicht;
- Figur 2: das Gerät nach Figur 1 in einem Schnitt entlang der Linie II-II in Figur 1;
- Figur 3: das Gerät nach Figur 1 in seiner Brühstellung;
- Figur 4: das Detail IV aus Figur 1 in Explosionsansicht; und
- Figur 5: eine zweite Ausführungsform des erfindungsgemäßen Gerätes zum Zubereiten von Brühgetränken in einer der Figur 1 entsprechenden Darstellung.

In den Zeichnungen ist mit 10 ein Gerät zum Zubereiten von Brühgetränken, insbesondere von Tee, bezeichnet. Hierbei sind die Brühsubstanzen in einem Brühbehältnis 11, im vorliegenden Fall in einem Teebeutel, untergebracht und werden in ein Brühgefäß 12 eingetaucht, in welchem sich Brühflüssigkeit 13, im einfachsten Fall kochendes Wasser, befindet.

Das erfindungsgemäße Gerät 10 weist ein im wesentlichen zylindrisches Gehäuse 14 auf, das an seiner Oberseite durch eine Kugelkalotte 15 verschlossen ist, in der sich ein längs einer erzeugenden verlaufender, vertikaler Schlitz 16 befindet, der sich bis in die zylindrische Umfangswand des Gehäuses 14 erstreckt. Wie ersichtlich, kann das Gerät 10 ohne Weiteres neben dem Brühgefäß 12 auf einem Tisch oder einer anderen geeigneten Unterlage aufgestellt werden.

Im Inneren des Gehäuses 14 befindet sich ein Ständer 17 in Form einer Platine aus Blech, die etwa in der Mitte des Gehäuses 14 mit einem Winkel 18 auf dem Boden 19 des Gehäuses 14 in aufrechter Lage befestigt ist. Am oberen Ende 20 der Ständerplatine 17 ist ein Schwenkhebel 21 angeordnet, der von einem Arm 22 gebildet wird, der mit seinem inneren Lagerende 23 im Ständer 17 schwenkbar gelagert ist und durch den Schlitz 16 aus dem Gehäuse 14 herausragt. An seinem Äußeren, freien Ende 24 trägt der Schwenkhebel 21 einen Klemmhaken 25, in welchen ein Aufhängefaden 26 des Teebeutels 11 eingeklemmt ist bzw. eingeklemmt werden kann. Insofern ist an dem freien Ende des Schwenkhebels 21 der Teebeutel 11 anhängbar bzw. angehängt. Auf diese Weise wird eine um eine horizontale Achse schwenkbare Befestigung des Teebeutels 11 ermöglicht. Andererseits könnte hier auch ein Teeei oder ähnliches entsprechend angebracht sein.

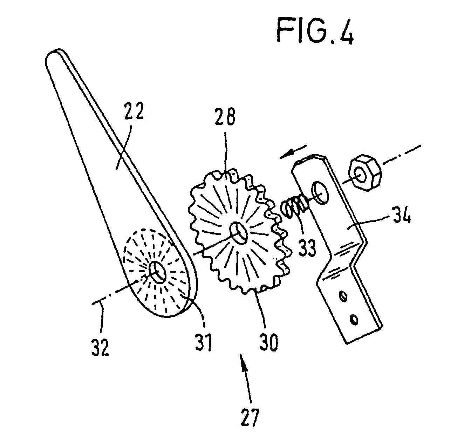

Der Schwenkhebel 21 ist an seinem Lagerende 23 über ein Rutschkupplung 27 mit einem letzten Element 28 eines Antriebsgetriebes 29 verbunden. Die Rutschkupplung 27 besteht bei dem dargestellten Ausführungsbeispiel aus einer rauhen Seitenfläche 30 des letzten Elementes 28 des Antriebsgetriebes 29 und einer dieser rauhen Seitenfläche zugewandten, ebenfalls aufgerauhten Seitenfläche 31 des Schwenkhebels 21, welcher auf der gleichen Welle 32 sitzt, wie das letzte Element 28. Der Schwenkhebel 21 wird von einem Federelement 33 axial gegen das letzte Element 28 gedrückt. Das Federelement 33 ist im dargestellten Ausführungsbeispiel eine Tellerfeder oder eine Schraubendruckfeder, die auf die Welle 32 aufgeschoben ist und zwischen dem letzten Element 28 des Antriebsgetriebes 29 und einer Stützkonsole 34 angeordnet ist. Die Stützkonsole 34 ist an der Ständerplatine 17 befestigt und trägt zusammen mit dieser die Welle 32 für den Schwenkhebel 21 und das letzte Element 28 des Antriebsgetriebes 29 (siehe Figur 4).

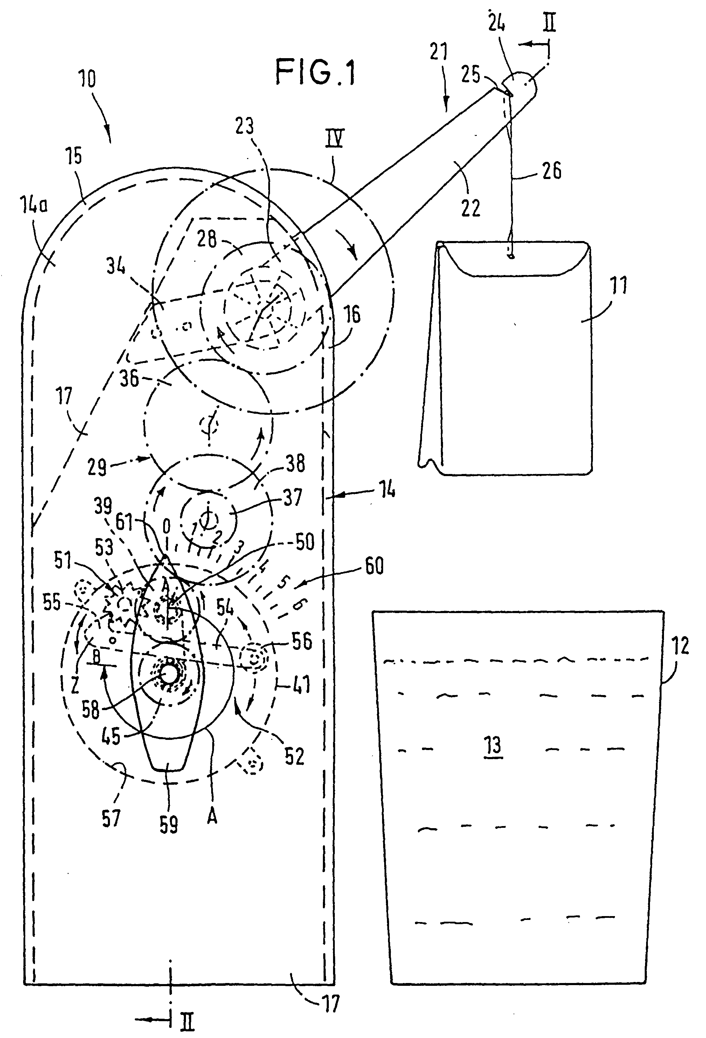

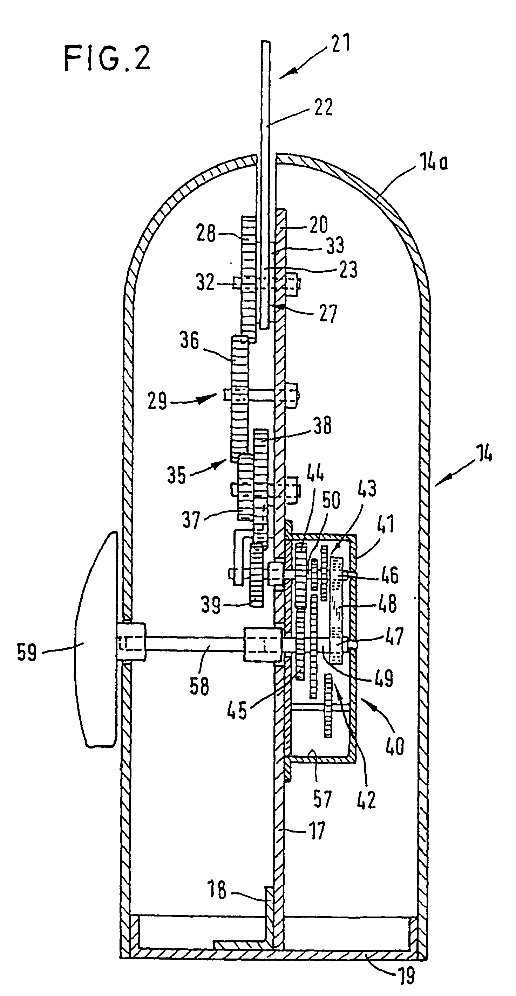

Bei dem in Figuren 1 bis 4 dargestellten Ausführungsbeispiel ist das Antriebsgetriebe 29 ein Rädergetriebe 35, welches aus mehreren Elementen 28, 36, 37 und 38 in Form von stirnverzahnten Zahnrädern besteht, die von einem Antriebsritzel 39 angetrieben werden. Das Antriebsritzel 39 gehört zu einem mechanischen Zeitmesser 40 mit Zusatzfunktion, der im vorliegenden Ausführungsbeispiel ein handelsüblicher Kurzzeitmesser mit Weckuhr ist, dessen Uhrgehäuse 41 auf der dem Antriebsgetriebe 29 gegenüberliegenden Seite der Ständerplatine 17 befestigt ist. Dieser Zeitmesser 40 bekannter Bauart hat ein Gehwerk 42 für die Zeitmessung und ein Weckwerk 43 für die Zusatzfunktion, die wirkungsmäßig durch Stirnzahnräder 44 und 45 und durch ihre Kraftspeicher 46 und 47 miteinander verbunden sind. Hierbei ist die Anordnung so getroffen, daß das Gehwerk 42 und das Weckwerk 43 von einer gemeinsamen Feder 48 angetrieben werden, deren eines Ende auf die Federhauswelle 49 des Gehwerks 42 und deren anderes Ende auf die Aktivierwelle 50 der Zusatzfunktion und des Weckwerkes 43 wirkt.

Einzelheiten von Gehwerk 42 und Weckwerk 43 des verwendeten handelsüblichen Zeitmessers 40 sind in den Zeichnungen nicht dargestellt. Man erkennt aber aus den Figuren 1 bis 3, daß das Antriebsritzel 39 für das Antriebsgetriebe 29 des Schwenkarmes 21 auf der Aktivierwelle 50 für die Zusatzfunktion sitzt, von der auch der Signalantrieb 41 für eine akkustische Signaleinrichtung 52 abgeleitet wird. Diese akkustische Signaleinrichtung 52 wird gleichzeitig mit dem Antriebsgetriebe 29 aktiviert. Sie besteht aus einem von der Aktivierwelle 50 aus angetriebenen Klinkenrad 53 und einem schwenkbar gelagerten Klöppel 54, der mit einer Klinke 55 in das Klinkenrad 53 eingreift und an seinem freien Ende einen Hammer 56 trägt, der gegen die Umfassungswand 57 des Uhrgehäuses 41 schlägt, wenn der Klöppel 54 von dem Klinkenrad 53 bei dessen Drehung hin- und herbewegt wird.

Man erkennt insbesondere aus Figuren 1, 2 und 3, daß der mechanische Zeitmesser 40 eine für Gehwerk 42 und Weckwerk 43 gemeinsame Aufzugswelle 58 aufweist, die mit der Federhauswelle 49 des Gehwerkes 42 direkt und mit der Aktivierwelle 50 des Weckwerkes 43 über die Stirnzahnräder 44 und 45 gekoppelt ist. Die Aufzugswelle 58 ragt aus dem Gehäuse 14 heraus und ist mit einem Einstellknopf 59 versehen, der zum Aufzug der Feder 48 dient und mit dem gleichzeitig der Entladezeitpunkt für die Aktivierwelle 50 eingestellt werden kann. Zu diesem Zwecke sind die Stirnzahnräder 44 und 45 derart mit ihrer Aktivierwelle 50 bzw. ihrer Federhauswelle 49 verbunden, daß bei einer Drehung des Einstellknopfes 59 in Figur 1 im Uhrzeigersinne beide Enden der Feder 48 als Kraftspeicher 46 und 47 aufgewickelt werden und die Feder 48 hierdurch gespannt wird, daß aber bei einer Drehung des Einstellknopfes 59 entgegen dem Uhrzeigersinn die Stirnzahnräder 44 und 45 auf ihren Wellen 50 und 49 gleiten können, wobei gleichzeitig mit diesen Stirnzahnrädern verbundene, nicht näher dargestellte Anschläge verstellt werden, die beim Ablauf des Gehwerkes den Klöppel 54 der akkustischen Signaleinrichtung 52 und die Aktivierwelle 50 des Kraftspeichers 46 freigeben.

Auf der Außenseite des Gehäuses 14 befindet sich eine Skala 60, auf der mit dem Einstellknopf 59 die gewünschte Brühzeit eingestellt werden kann.

Der Betrieb des erfindungsgemäßen Gerätes 10 zum Zubereiten von Brühgetränken wird nachfolgend geschildert.

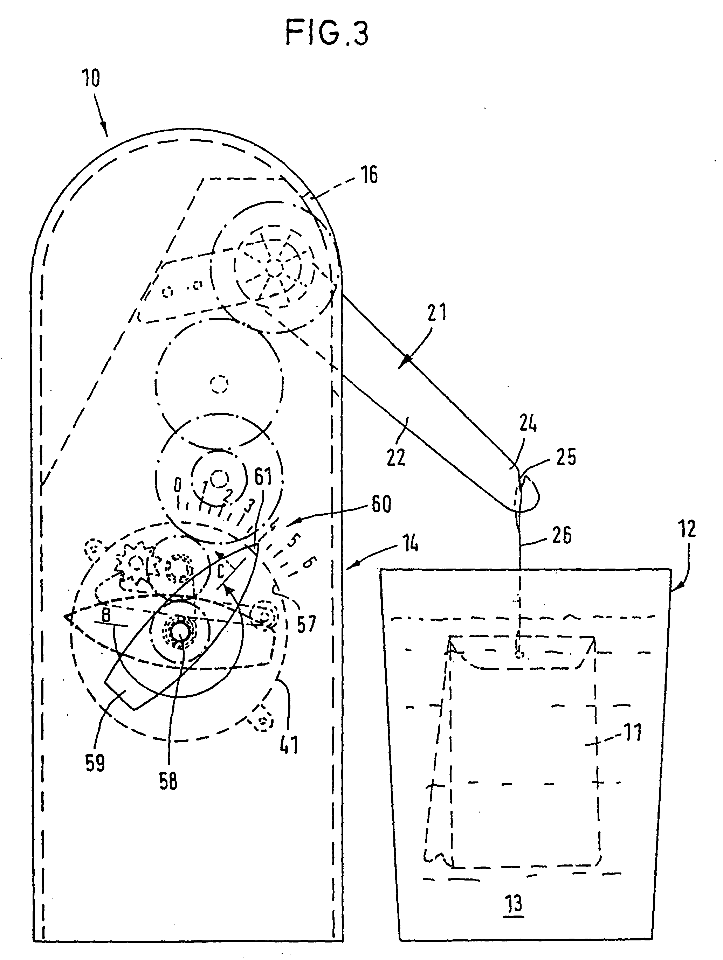

Das Gerät 10 wird neben dem mit heißer Brühflüssigkeit 13 gefüllten Brühgefäß 12 aufgestellt, so daß sich das freie Ende 24 des Schwenkhebels 21 über dem Brühgefäß befindet. Auch wird der Teebeutel 11 oder ein anderes Brühbehältnis mit den zu überbrühenden Substanzen an dem Schwenkhebel 21 befestigt. Dieses erfolgt bei vorliegendem Ausführungsbeispiel durch ein Einhängen des Teebeutelfadens in die Klemme 25. Der Einstellknopf 49 wird im Uhrzeigersinn aus seiner in Figur 1 gezeigten Ausgangsstellung A so weit gedreht, bis die Spitze 61 des Einstellknopfes 59 die Stellung B erreicht (siehe Figuren 1 und 3). Bei dieser Drehbewegung des Einstellknopfes 59 wird über die mit der Aufzugswelle 58 gekoppelte Federhauswelle 49 das untere Ende der Feder 48 aufgewickelt, welches den Kraftspeicher 47 für das Gehwerk 42 bildet. Gleichzeitig wird über die miteinander kämmenden Stirnzahnräder 44 und 45 die Aktivierwelle 50 entgegen dem Uhrzeigersinne gedreht und das andere Ende der Feder 48 aufgewickelt und hierdurch der Kraftspeicher 46 für die Zusatzfunktion (akkustische Signaleinrichtung und Antrieb) geladen.

Da das Antriebsritzel 39 bei der vorerwähnten Drehung der Aktivierwelle 50 mit dieser drehfest verbunden ist, treibt das Antriebsritzel 39 über das Rädergetriebe 35 den Schwenkhebel 21 an und verschwenkt diesen aus seiner in Figur 1 dargestellten Ausgangslage in seine in Figur 3 dargestellte, abgesenkte Brühstellung. Hierdurch wird das Brühbehältnis 11 in das Brühgefäß 12 abgesenkt und taucht in die Brühflüssigkeit 13 ein.

Der Einstellknopf 49 wird anschließend entgegen dem Uhrzeigersinn bis zu einer Stellung C zurückgedreht (siehe Figur 3), in welcher die Spitze 61 des Einstellknopfes 59 auf der Skala 60 die Stelle erreicht, die der gewünschten Brühzeit entspricht.

Das Gehwerk 42 des Zeitmessers 40 läuft nun solange, bis die eingestellte Brühzeit abgelaufen ist und ein nicht näher dargestellter Anschlag den Klöppel 54 und die Aktivierwelle 50 des Kraftspeichers 46 für die Zusatzeinrichtung löst. Der sich hierdurch entspannende Kraftspeicher 46 dreht nun die Aktivierwelle 50 und das Antriebsritzel 39 im Uhrzeigersinne, wodurch über das Antriebsgetriebe 29 der Schwenkhebel 21 hochschwenkt und der Teebeutel 11 aus dem Brühgefäß 12 gehoben wird. Danach nimmt das Gerät 10 seine in Figur 1 dargestellte Ausgangsstellung wieder ein und der im Brühgefäß 12 zubereitete Tee oder ein anderes Brühgetränk kann genossen werden.

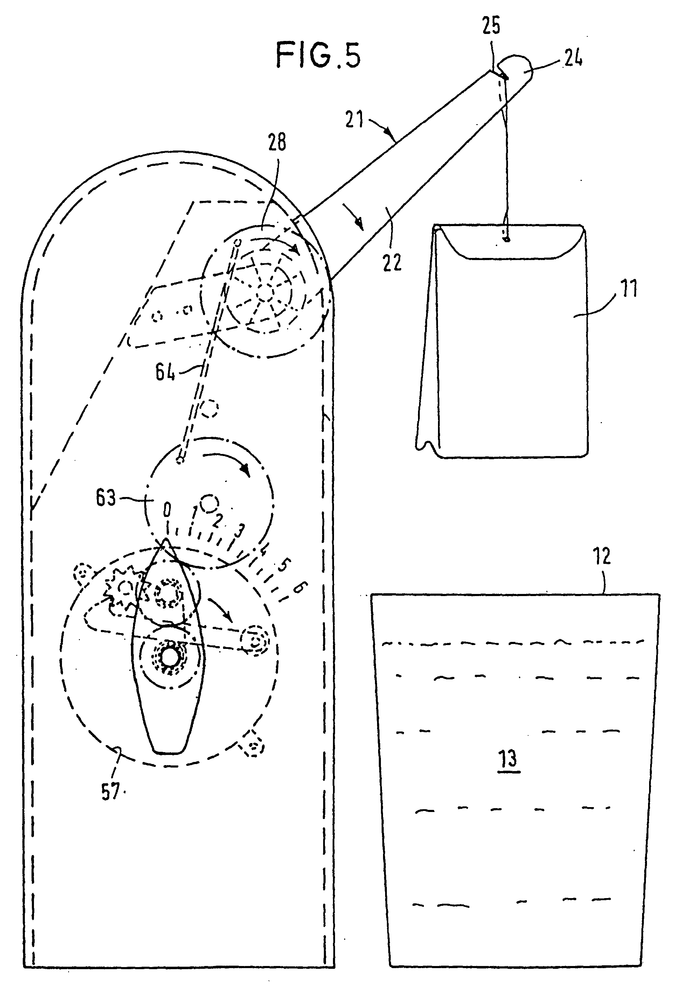

In Figur 5 ist eine etwas andere Ausführungsform der Erfindung gezeigt, bei der das Gerät im Wesentlichen identisch der ersten Ausführungsform aufgebaut ist. Als Antriebsgetriebe dient jedoch kein Rädergetriebe sondern ein Hebelgetriebe, bei dem ein erstes Antriebselement 63 und das letzte Antriebselement 28 durch eine Pleuelstange 64 miteinander verbunden sind, so daß sie sich gleichsinnig und mit gleicher Geschwindigkeit bewegen.

Die Erfindung ist nicht auf die dargestellten und beschriebenen Ausführungsbeispiele beschränkt, sondern es sind mehrere Änderungen und Ergänzungen möglich, ohne den Rahmen der Erfindung zu verlassen. Beispielsweise können auch andere mechanische Zeitmesser mit Zusatzfunktion verwendet werden, beispielsweise solche, die mit zwei getrennten Federhäusern arbeiten. Ferner ist es möglich, die Rutschkupplung zwischen Schwenkhebel und Antriebsgetriebe anders auszubilden, beispielsweise mit Reibscheiben zwischen den gemeinsam zu bewegenden Teilen. Selbstverständlich kann das Gehäuse auch eine andere Form aufweisen und beispielsweise quaderförmig sein oder einen viereckigen oder sechseckigen Grundriß aufweisen. Anstelle einer Klemme am äußeren Ende des Schwenkhebels kann auch ein einfacher Haken oder eine Klammer angeordnet sein. Statt eines mechanischen Uhrwerkes kann ein kleiner batteriegetriebener Elektromotor als Energiequelle sowohl für Uhrwerk als auch für den Antrieb des Schwenkhebels dienen.

## Patentansprüche

1. Gerät zum Zubereiten von Brühgetränken mit einem Schwenkhebel (21) und mit einem Zeitmesser (40), der derart mit dem Schwenkhebel wirkverbunden ist, daß er nach Ablauf einer vorbestimmten Zeit eine Schwenkbewegung iniziiert, wobei an einem freien Ende (24) des Schwenkhebels (21) eine Befestigungsvorrichtung (25) für ein Behältnis (11) für Brühsubstanzen angeordnet ist ***dadurch gekennzeichnet,* daß** ein mechanische Antrieb vorgesehen ist, welcher einen mechanischen Kraftspeicher (46-48) und den Zeitmesser (40) umfaßt, der derart mit dem Kraftspeicher (46-48) wirkverbunden ist, daß sich der Kraftspeicher (46-48) nach Ablauf einer vorbestimmten Zeit entlädt, wobei der Schwenkhebel (21) über ein Getriebe (29) derart mit dem mechanischen Antrieb wirkverbunden ist, daß er beim Entladen des Kraftspeichers (46-48) eine mechanisch angetriebe Schwenkbewegung durchführt.

2. Gerät nach Anspruch 1, ***dadurch gekennzeichnet, daß*** an dem freien Ende (24) des Schwenkhebels (21) ein Behältnis (11) für Brühsubstanzen anhängbar bzw. angehängt ist.

3. Gerät nach Anspruch 1 oder 2, ***dadurch gekennzeichnet, daß*** an dem freien Ende (24) des Schwenkhebels (21) eine Befestigungsvorrichtung (25) zur um eine horizontale Achse schwenkbaren Befestigung eines Behältnisses (11) für Brühsubstanzen vorgesehen ist.

4. Gerät nach einem der Ansprüche 1 bis 3. ***dadurch gekennzeichnet, daß*** an dem freien Ende (24) des Schwenkhebels (21) ein Behältnis (II) für Brühsubstanzen um eine horizontale Achse schwenkbar befestigt ist.

5. Gerät nach einem der Ansprüche 1 bis 4, ***dadurch gekennzeichnet, daß*** der Schwenkhebel (21) über ein Antriebsgetriebe (29) mit einer Aktivierwelle (50) des Kraftspeichers (46-48) verbunden ist, die mit dem Zeitmesser (4) derart wirkverbunden ist, daß die Aktivierwelle (50) nach Ablauf der vorbestimmten Zeit gelöst wird und sich der Kraftspeicher (46) entlädt.

6. Gerät nach einem der Ansprüche 1 bis 5, ***dadurch gekennzeichnet, daß*** der Schwenkhebel (21) an einem Ständer (17) gelagert ist.

7. Gerät nach einem der Ansprüche 1 bis 6, ***dadurch gekennzeichnet, daß*** der Schwenkhebel (21) über eine Rutschkupplung (27) mit einem Antrieb (29) verbunden ist.

8. Gerät nach einem der Ansprüche 1 bis 7, ***gekennzeichnet durch*** eine Weckuhr (40), die einen Kraftspeicher (46-48), ein Gehwerk (42) und ein Weckwerk (43) umfaßt, wobei der Kraftspeicher (46-48) sowohl mit dem Gehwerk (42) als auch dem Weckwerk (43) wirkverbunden ist.

9. Gerät nach Anspruch 8, ***dadurch gekennzeichnet, daß*** Weckwerk (43) mit einem Antrieb (29) für den Schwenkhebel (21) wirkverbunden ist.

10. Gerät nach Anspruch 8 oder 9, ***dadurch gekennzeichnet, daß*** die Weckuhr (40) eine für Gehwerk (42) und Weckwerk (43) gemeinsame Aufzugswelle (58) aufweist, die aus einem Gehäuse (14) herausragt und auf der Einstellmittel (59) zur Einstellung der vorbestimmten Zeit angeordnet sind.

## Claims

1. A machine for preparing hot drinks, having a swiveling lever (21) and a timer (40) which is operatively connected to the swiveling lever such that it initiates a swiveling movement after a predetermined period of time has elapsed, whereby a fastening device (25) for a container (11) for hot substances is arranged on one free end (24) of the swiveling lever (21), **characterized in that** a mechanical drive is provided, said drive comprising a mechanical energy storing device (46-48) and a timer (40) which is operatively connected to the energy storing device (46-48) in such a way that the energy storing device (46-48) is discharged after a predetermined period of time has elapsed, and the swiveling lever (21) is operatively connected to the mechanical drive by a gear (29) such that it executes a mechanically driven swiveling motion on discharge of the energy storing device (46-48).

2. The machine according to claim 1, **characterized in that** a container (11) for hot substances is or can be attached to the free end (24) of the swiveling lever (21).

3. The machine according to claim 1 or 2, **characterized in that** a fastening device (25) is provided on the free end (24) of the swiveling lever (21) for fastening a container (11) for hot substances so that it can swivel about a horizontal axis.

4. The machine according to one of claims 1 through 3, **characterized in that** a container (11) for hot substances is mounted on the free end (24) of the swiveling lever (21) in such a way that it can pivot about a horizontal axis.

5. The machine according to one of claims 1 through 4, **characterized in that** the swiveling lever (21) is connected by a driving gear (29) to an activation shaft (50) of the energy storing device (46-48), said shaft being operatively connected to the timer (4) in such a way that the activation shaft (50) is released after a predetermined period of time has elapsed and the energy storing device (46-48) is discharged.

6. The machine according to one of claims 1 through 5, **characterized in that** the swiveling lever (21) is mounted on a stand (17).

7. The machine according to one of claims 1 through 6, **characterized in that** the swiveling lever (21) is connected by a slip clutch (27) to a drive (29).

8. The machine according to one of claims 1 through 7, **characterized by** an alarm clock (40) comprising a energy storing device (46-48), wheel works (42) and alarm works (43), where the energy storing device (46-48) is operatively connected to the wheel works (42) and the alarm works (43).

9. The machine according to claim 8, **characterized in that** wheel works (43) are operatively connected to a drive (29) for the swiveling lever (21).

10. The machine according to claim 8 or 9, **characterized in that** the alarm clock (40) has a winding stem (58) for both the wheel works (42) and the alarm works (43), said winding stem projecting out of a housing (14) and being arranged on the adjusting means (59) for adjusting the predetermined time.

## Revendications

1. Appareil pour préparer des boissons chaudes avec un levier basculant (21) et un minuteur (40) fonctionnant en liaison avec le levier basculant de telle manière qu'après l'écoulement d'une période déterminée, il initialise un mouvement rotatif, un dispositif de fixation (25) pour un sachet (11) de substance d'infusion étant placé à une extrémité libre (24) du levier basculant (21), **caractérisé en ce qu**'un entraînement mécanique est prévu, englobant un accumulateur mécanique de puissance (46-48) et un minuteur (40), qui fonctionne en liaison avec l'accumulateur de puissance (46-48) de telle manière que l'accumulateur (46-48) se décharge après l'écoulement d'une période déterminée, le levier basculant (21) fonctionnant en liaison avec l'entraînement mécanique par l'intermédiaire d'un engrenage (29) de manière à effectuer, lors du déchargement de l'accumulateur (46-48) un mouvement rotatif à entraînement mécanique.

2. Appareil selon la revendication 1, **caractérisé en ce que** l'on peut accrocher ou qu'est accroché, à l'extrémité libre (24) du levier basculant (21), un sachet (11) pour substances à infuser.

3. Appareil selon la revendication 1 ou 2, **caractérisé en ce qu'**à l'extrémité libre (24) du levier basculant (21), un dispositif de fixation (25) servant à fixer un sachet (11) pour substances à infuser, tournant autour d'un axe horizontal, est prévu.

4. Appareil selon une des revendications 1 à 3,
**caractérisé en ce qu'**à l'extrémité libre (24) du levier basculant (21) un sachet (11) pour substances à infuser tournant autour d'un axe horizontal est fixé.

5. Appareil selon une des revendications 1 à 4,
**caractérisé en ce que** le levier basculant (21) est relié, par l'intermédiaire d'un engrenage d'entraînement (29) avec un arbre d'actionnement (50) de l'accumulateur de puissance (46-48), qui fonctionne en liaison avec le minuteur (4) de manière à libérer l'arbre d'actionnement (50) après l'écoulement de la période définie et à décharger l'accumulateur de puissance (46-48).

6. Appareil selon une des revendications 1 à 5,
**caractérisé en ce que** le levier basculant (21) est monté sur un pied (17).

7. Appareil selon une des revendications 1 à 6,
**caractérisé en ce que** le levier basculant (21) est relié par un accouplement à friction (27) à un système d'entraînement (29).

8. Appareil selon une des revendications 1 à 6,
**caractérisé par** un réveil (40), comportant un accumulateur de puissance (46-48), un mécanisme (42) et un système de réveil (43), l'accumulateur de puissance (46-48) fonctionnant aussi bien en liaison avec le mécanisme (42) qu'avec le système de réveil (43).

9. Appareil selon la revendication 8, **caractérisé en ce que** le système de réveil (43) fonctionne en liaison avec un système d'entraînement (29) pour le levier basculant (21).

10. Appareil selon la revendication 8 ou 9, **caractérisé en ce que** le réveil (40) présente un arbre élévateur (58), commun au mécanisme (42) et au système de réveil (43), qui déborde d'un boîtier (14) et est positionné sur le système (59) servant à régler le temps défini.
